(19) **Europäisches Patentamt**

**European Patent Office**

**Office européen des brevets**

(11) **EP 0 715 257 B1**

(12) **FASCICULE DE BREVET EUROPEEN**

(45) Date de publication et mention
de la délivrance du brevet:
**13.06.2001 Bulletin 2001/24**

(51) Int Cl.7: **G06F 9/46**

(21) Numéro de dépôt: **95402573.0**

(22) Date de dépôt: **17.11.1995**

(54) **Outil d'aide à la répartition de la charge d'une application répartie**

Hilfsgerät zur Lastabgleichung einer verteilten Anwendung

Tool for assisting the load balancing of a distributed application

(84) Etats contractants désignés:
**DE ES FR GB IT SE**

(30) Priorité: **30.11.1994 FR 9414386**

(43) Date de publication de la demande:
**05.06.1996 Bulletin 1996/23**

(73) Titulaire: **BULL S.A.**
**78430 Louveciennes (FR)**

(72) Inventeurs:
 • **Sitbon, Gérard**
 **F-94400 Vitry (FR)**
 • **Urbain, François**
 **F-75002 Paris (FR)**
 • **Saliba, Thérèse**
 **F-78190 Montigny Le Bretonneux (FR)**

(74) Mandataire: **Colombe, Michel et al**
**Direction de la Propriété Intellectuelle BULL SA**
**Poste courrier:LV 58F35**
**68 route de Versailles**
**78430 Louveciennes (FR)**

(56) Documents cités:
 • **JOURNAL OF PARALLEL AND DISTRIBUTED COMPUTING, vol. 18, no. 1, Mai 1993 DULUTH, MN US, pages 1-13, JIAN XU: 'Heuristic Methods for Dynamic Load Balancing in a Message-Passing Multicomputer'**
 • **IEEE TRANSACTIONS ON SOFTWARE ENGINEERING, vol. 15, no. 11, Novembre 1989 NEW YORK, US, pages 1444-1458, M. THEIMER AET AL.: 'Finding Idle Machines in a Workstation-Based Distibuted System'**

## Description

La présente invention concerne un outil d'aide à la répartition de la charge d'une application répartie sur plusieurs machines appartenant à un système informatique distribué en réseau local.

La tendance actuelle du développement des systèmes informatiques est de former un tel système par association d'une pluralité de machines connectées entre elles par l'intermédiaire d'un réseau, de type local, par exemple. Tout utilisateur fait tourner des applications de types extrêmement variés sur cet ensemble de machines. Ces applications font appel à des services qui fournissent des informations nécessaires à la mise en oeuvre du ou des problèmes qu'elles traitent, lesquels sont offerts par tout ou partie de ces machines.

Lorsqu'une application en train de tourner requiert l'utilisation d'un service déterminé, dans la pratique courante, elle procède de la manière suivante:

- ou bien elle choisit de manière purement aléatoire la machine qui lui fournira ce service et lui confie ce travail,
- ou bien elle effectue un choix circulaire parmi toutes les machines , c'est-à-dire qu'elle confie tour à tour, toujours dans le même ordre temporel, le travail de fourniture des services qu'elle requiert successivement : ainsi, si le système possède trois machines, elle confiera à la machine No 1 le travail de fourniture des services qu'elle requiert en premier dans le temps, à la machine No 2, celui qu'elle requiert en second dans le temps, à la machine No 3, celui qu'elle requiert en troisième dans le temps et ainsi de suite dans l'ordre machine No 1, No 2, No 3, No 1, etc.

Que ce soit dans l'un ou l'autre des deux cas décrits ci-dessus, le travail d'aucune des machines n'est optimisé dans le temps, d'une part, et les possibilités de celles-ci en matière de débit et de performances ne sont utilisées que bien au-dessous de leur niveau maximum, d'autre part.

On connaît des solutions permettant de remédier à ces inconvénients : l'une de celles-ci est décrite dans la demande de brevet français No. 94 08764, déposée le 13/07/94, par la société demanderesse, sous le titre "système informatique ouvert à serveurs multiples". Dans un tel système formé par l'association d'un système central dit client et de plusieurs serveurs, chacun de ceux-ci calcule sa propre charge suivant des critères propres à chaque application tournant sur le client, ainsi que son évolution prévisible dans le temps et transmet ces deux facteurs au client. Ce dernier, lorsqu'une application déterminée requiert les services d'un serveur , choisit celui le moins chargé durant la période de temps où les services devront être rendus et lui confie le travail de fourniture des services demandés.

On connaît aussi une solution consistant en une répartition de la charge au sein d'un ordinateur multiprocesseur. Cette solution est décrite dans l'article de JIAN XU intitulé « Heuristic Methods for Dynamic Load Balancing in a Message-Passing Multicomputer», publié en mai 1993, dans le document JOURNAL OF PARALLEL AND DISTRIBUTED COMPUTING, vol. 18, n°. 1 Duluth, MN, US.

La présente invention constitue un perfectionnement, et une généralisation de la solution précédente.

Selon l'invention, l'outil au service d'une application répartie tournant sur les machines d'un système informatique distribué en réseau local, destiné à répartir la charge sur chacune de celles-ci, est celui défini par la revendication 1.

D'autres caractéristiques et avantages de la présente invention apparaîtront dans la description suivante donnée à titre d'exemple non limitatif et en se référant aux dessins annexés. Sur ces dessins :

- La figure 1 montre un système informatique distribué incluant l'outil d'aide à la répartition de la charge selon l'invention,
- la figure 2 montre l'automate de répartition des rôles maître-agents entre les différents éléments constituant l'outil d'aide à la répartition de la charge, selon l'invention.

## 1) CARACTERISTIQUES ESSENTIELLES DE L'OUTIL SELON L'INVENTION

### A) structure :

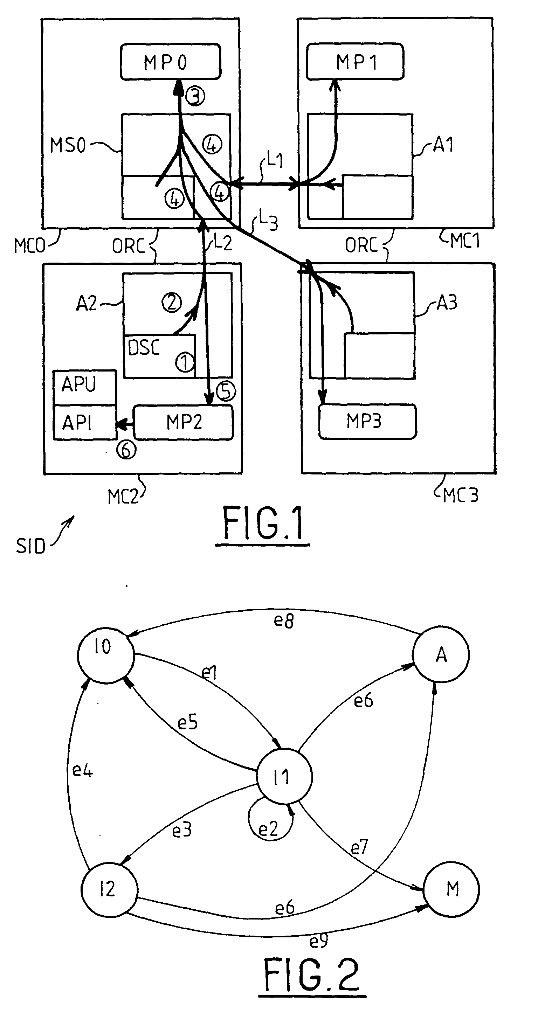

Les différents éléments caractéristiques essentiels de l'outil ORC d'aide à la répartition de la charge (load balancing toolkit, en anglais) dans un système informatique distribué, selon l'invention -Pour simplifier, dans la suite du texte, il sera appelé "outil d'aide" - apparaissent à la figure 1.

Tel que montré à la figure 1, le système informatique distribué, de type quelconque, ici dénommé SID, comprend quatre machines informatiques de taille et de type quelconques, à savoir MC0, MC1, MC2, MC3. Chacune de ces machines -petits, moyens, gros ordinateurs- comprend les éléments habituels, à savoir un ou plusieurs processeurs centraux dits CPU (abréviation de Central Processor Unit, en anglais), des mémoires associées à ces derniers, des unités d'entrées/sorties (I/O units, en anglais), des moyens de connexion au réseau RE. Ce dernier est symboliquement représenté par des flèches à double sens représentant les liaisons de données entre les quatre machines MC0 à MC3, à la figure 1.

L'outil d'aide ORC proprement dit comprend le maître MS0, et les trois agents A1, A2, A3. Tout agent peut également être maître, selon des conditions qui seront explicitées par la suite. Aussi bien le maître que les agents sont constitués par des outils informatiques connus de l'homme du métier sous le nom de DAEMONs. Un DAEMON est un outil informatique ou entité tournant sur une machine, capable de répondre à une question.

A l'intérieur de chacune des machines MC0 à MC3, les DAEMONs MS0, A1, A2, A3 sont associés respectivement à des mémoires partagées MP0, MP1, MP2, MP3. Chacune d'entre elles contient la charge de la machine correspondante mais également la charge des autres machines de SID.

On suppose, à la figure 1, que l'application répartie tourne sur la machine MC2 et qu'elle requiert donc des services fournis par les autres machines MC0, MC1, MC3. On désigne cette application par APU. L'endroit où se trouvent localisés le maître et les agents est indépendant de l'endroit où tourne APU.

## B) fonctionnement :

Les grandes lignes de fonctionnement de l'outil ORC sont les suivantes, étant entendu que l'on suppose que, lors de l'établissement de la communication entre toutes les machines du système SID, il est établi que MS0 est le maître et que A1, A2, A3 sont les agents. On se réfère toujours à la figure 1, et notamment aux flèches et aux chiffres entourés qui les accompagnent, qui indiquent respectivement le sens du flux des informations qui circulent entre le maître et les agents, d'une part, et la séquence des opérations, d'autre part.

<u>OPERATION 1</u> : Chaque agent ainsi que le maître recueillent, pour la machine sur laquelle ils tournent, à des intervalles de temps donnés qui constituent des premiers instants d'échantillonnages déterminés ti, les données de charge de celle-ci, et ce pour chacun des éléments qui la constitue (charge de CPU, charge des mémoires associées, charge des entrées/sorties, charge du réseau, etc.). A partir de la charge de chaque élément, exprimée en pourcentage de la charge maximale admissible de celui-ci, on calcule la charge totale de la machine en question. Ceci est accompli par des moyens de calcul de charge, respectivement MCCO pour MS0, MCC1 pour A1, MCC2 pour A2, MCC3 pour A3. Ces moyens sont tout simplement constitués par des programmes de calcul mettant en oeuvre le mode de calcul de la charge décrit plus bas, au paragraphe 2 : "Mode de calcul de la charge par chacun des agents". Ces moyens sont naturellement partie intégrante de chacun des maître et agents, MS0, A1 à A3 et, de ce fait, ne sont pas représentés en tant que tels à la figure 1, pour simplifier. Une fois la charge totale de la machine en question calculée, on obtient ainsi un ensemble de données statistiques sur la charge de la dite machine, à savoir DSC. A la figure 1, on n'a représenté cette opération que pour l'agent A2, pour des raisons évidentes de clarté de celle-ci.

<u>OPERATION 2</u> : Les agents envoient à intervalles réguliers à MS0, les données statistiques de charge de la machine correspondante, par l'intermédiaire du réseau (pour A2, par l'intermédiaire de la liaison L2 entre MC2 et MC0).

<u>OPERATION 3</u> : Le maître MS0 centralise, pratiquement à ces mêmes intervalles réguliers définis pour l'opération 2, qui constituent ainsi des seconds instants d'échantillonnages déterminés Ti, toutes les données statistiques de charge de tous les agents ainsi que les siennes propres au niveau de sa mémoire partagée associée, ici MP0. Cette centralisation est, de fait, une opération de collecte des données de charge. Elle est donc effectuée par des moyens de collecte des données de charge ,respectivement MRCO pour MS0, MRC1 pour A1, MRC1 pour A2, MRC3 pour A3, qui sont de fait des programmes de collecte intégrés dans le maître et dans chacun des agents A1 à A3 et ne sont donc pas représentés pour simplifier à la figure 1.

<u>OPERATION 4</u> : Le maître MSO envoie par l'intermédiaire de moyens d'envoi MTC0, toutes ces données à chaque agent A1, A2, A3 par l'intermédiaire du réseau RE, à savoir par l'intermédiaire des liaisons L1 entre MC0 et MC1, L2 entre MC0 et MC2, L3 entre MC0 et MC3. MTC0 est partie intégrante de MSO et n'est donc pas représenté, pour simplifier, à la figure 1.

<u>OPERATION 5</u> : Chaque agent reçoit ces données de charge et les copie dans sa mémoire partagée associée, MP1 pour A1, MP2 pour A2, MP3 pour A3. Ceci est accompli par les moyens MRCC1 à MRCC3, respectivement pour A1 à A3, parties intégrantes de ceux-ci et non représentés pour simplifier à la figure 1.

<u>OPERATION 6</u> : L'application APU va explorer la mémoire partagée de la machine sur laquelle elle tourne pour y rechercher la charge estimée pour chacune des machines, à l'instant où elle aura besoin qu'on lui rende des services déterminés, en déduit la machine la moins chargée à cet instant et demande à cette dernière de lui rendre ces services.

## 2) MODE DE CALCUL DE LA CHARGE PAR CHACUN DES AGENTS :

La description est faite sur un exemple de charges sur les éléments CPU, mémoire, Entrées/Sorties, et réseau RE.

La description du mode de calcul de la charge par chacun des moyens MCC0 à MCC3 est faite par référence aux tableaux 1 à 4 qui figurent en annexe 1 à la fin de la description et où les charges sont données en pourcentage.

Le calcul de la charge, pour chaque agent et maître, est identique à celui décrit dans la demande précitée. Il est rappelé brièvement ci-dessous.

La charge totale Wt d'un agent (et également du maître) est obtenue à partir de la formule suivante :

$$Wt = k1*W1 + k2*W2 + k3*W3 + k4*W4,$$

où :

- W1 est le pourcentage d'utilisation dans le temps du processeur central de l'agent.
- W2 est le pourcentage d'utilisation de la mémoire de l'agent, c'est-à-dire le rapport entre la capacité de mémoire réellement utilisée et la capacité totale de celle-ci.
- W3 est le pourcentage d'utilisation du réseau par l'agent, c'est-à-dire le rapport entre le nombre d'informations émises et reçues par l'agent et le débit maximal admissible sur le réseau.
- W4 est le pourcentage d'utilisation des unités d'entrée/sortie par l'agent.
- k1, k2, k3, k4, sont des facteurs de pondération spécifiques du processeur, de la mémoire, du réseau, des entrées/ sorties. Leur somme est égale à 1. Leurs valeurs dépendent de la nature de l'application en train de tourner, ici APU sur la machine MC2.

Les charges, W1, W2, W3, W4 sont mesurées et Wt calculée, ainsi qu'on peut le voir sur chacun des tableaux de l'annexe 1, à des instants d'échantillonnage déterminés t1, t2, t3, t4, t5, t6, t7, etc., de période T (en fait les instants ti, mentionnés plus haut lors de la description de l'opération 1).

Le tableau 1 donne un exemple de données de charge recueillies par un agent quelconque, par exemple A1, et relatives à la machine correspondante MC1, pour tous les instants t1 à t7. Ces données sont bien entendu mémorisées dans la mémoire partagée MPI de la machine MC1 où tourne A1, avant qu'elles ne soient envoyées à MSO.

On peut donc voir sur ce tableau que, par exemple, W1 est égal à 35 à l'instant t1, W2 à 67 à l'instant t4, W3 à 38 à t6, W4 à 32 à t7 et ainsi de suite.

Un programme de calcul API associé à APU, qui tourne sur MC2, applique ensuite, -pour les données de charge de chacun des agents et maître et qui, après exécution de l'opération 3, sont contenues dans la mémoire partagée MP0 de MC0 associée à MS0, -les facteurs de pondération k1 à k4 spécifiques des machines correspondantes pour l'application APU.

On obtient alors le tableau 2 qui montre, pour chacune des machines MC0 à MC4, la valeur des données de charge globale Wt, aux instants t1 à t7. Ainsi, on peut voir que , pour MC0, Wt est égale à 56 à l'instant t1, 32 à t2, 67 à t3, etc.. Pour MC1, Wt est égale à 23 à t1, 34 à t2, etc. et ainsi de suite pour les autres machines.

L'étape suivante de calcul de la charge, pour toutes les machines, consiste à estimer, par extrapolation, par la méthode mathématique connue des moindres carrés, la valeur de la charge Wt estimée à l'instant t8= (t7 + T).

On obtient alors le tableau 3. On peut y lire, par exemple que la valeur estimée de la charge de MC0 à MC3, à cet instant t8 est respectivement de 73, 82, 36, 76.

On applique ensuite à la charge totale de chaque machine, un coefficient de puissance Cp, spécifique de cette dernière, pour obtenir le taux de charge réel disponible C1 de celle-ci, selon la formule :

$$C1 = (100 - Wt \text{ (estimée)}) * Cp.$$

En effet, il est important de tenir compte des caractéristiques de chaque machine, étant donné qu'on se trouve dans un milieu informatique hétérogène, où la puissance, la taille, et le type des machines qui le composent sont différents. Ainsi, si une machine est peu chargée, et si, en même temps sa puissance de traitement est insuffisante pour assurer les services que lui demande, à un moment donné, l'application APU, il est évident que c'est une autre machine qui doit assurer ces services. D'où la nécessité d'un facteur de correction pour définir la charge et, par suite, l'existence correspondante à cet effet du coefficient de puissance Cp.

Le coefficient Cp d'une machine donnée est calculé en faisant une synthèse de la puissance du processeur central CPU, de la capacité des mémoires, de la puissance de traitement des unités d'entrées/sorties, etc. Il est recalculé chaque fois que l'on modifie la configuration matérielle de la machine ou que l'on modifie son système d'exploitation (Operating System, en anglais). De même, chaque fois que la configuration générale du système informatique distribué SID est modifiée, tous les coefficients Cp de toutes les machines de ce dernier sont redéfinis. Un Cp égal à 1 correspond à une machine de type moyen, laquelle est définie par l'utilisateur.

On peut lire sur le tableau 4 des exemples de taux de charge réel disponible C1 pour chaque machine MC0 à MC3. Ainsi, pour MC0, avec un taux de charge estimé de 73, un coefficient de puissance Cp de 2,5, on a un taux de charge réel disponible de 67,5. Les mêmes chiffres sont respectivement de 82, 2, 36 pour MC1 et ainsi de suite pour MC2 et MC3.

## 3) MODE D'ELECTION DU MAITRE MS0 :

La philosophie de base est que tout DAEMON tournant sur quelque machine que ce soit peut être maître. Il importe donc d'élaborer un mécanisme qui permette de définir lequel d'entre eux sera le maître et les conditions de son élection, d'une part, ainsi que les modalités de son remplacement s'il s'avère défaillant, d'autre part.

Le mécanisme d'élection doit s'assurer qu'au minimum 1 DAEMON est en train de tourner et que deux d'entre eux ne peuvent être simultanément maîtres (notamment s'ils démarrent au même instant).

Il se compose des 5 grandes phases suivantes :

**Phase 1 :** Lorsqu'un DAEMON Démarre, il génère un identificateur unique ID conforme au protocole utilisé sur le réseau RE, par exemple conforme au protocole TCP-IP utilisé dans l'exemple de réalisation de l'invention décrit ici. Cet identificateur est composé de l'adresse Ethernet (Ethernet est la partie du protocole TCP-IP relative au réseaux locaux qui est utilisée dans l'exemple de réalisation décrit ici, Ethernet étant bien entendu normalisé et donc connu de l'homme du métier), de l'instant d'émission de l'identificateur, et d'une valeur aléatoire. En même temps, il se place dans un état intermédiaire et envoie ces deux informations (état où il se trouve, ID) sur le réseau RE, à destination de toutes les machines de ce dernier.

**Phase 2 :** il attend de connaître les informations identiques provenant des autres DAEMONS, pendant un intervalle de temps déterminé Tr (de l'ordre de 5 à 10 secondes). Il est candidat à être maître.

**Phase 3 :** Dès qu'il les reçoit, il les analyse :

- Si elles proviennent d'un DAEMON qui, de fait, est maître,c'est -à- dire est considéré comme MS0, il se considère comme un agent.
- Si elles proviennent d'un DAEMON dans un état intermédiaire, alors il compare les identificateurs, le sien propre et celui qu'il reçoit :

  - si son propre identificateur est inférieur à celui qu'il reçoit, il conserve le droit d'être le maître MS0.
  - si son propre identificateur est supérieur ou égal à celui qu'il reçoit, il cède la place. Il réémet alors les deux dites informations (son propre ID, son état) et attend à nouveau des réponses, pendant le dit intervalle de temps Tr, encore appelé minuterie.

**Phase 4 :** Cet intervalle de temps étant écoulé, le DAEMON en question essaie à nouveau. Pour éviter la perte de messages, ce qui est toujours possible sur le réseau RE, on utilise la procédure suivante :

- L'émission et l'écoute des réponses sont répétées 5 fois,
- Si le DAEMON en question reçoit la réponse d'un autre DAEMON qui se révèle être un agent, il est sûr que le maître MS0 existe et il attend que la réponse de ce dernier lui parvienne.

**Phase 5 :** Lorsque les 5 répétitions ont été faites , et que le DAEMON en question n'a reçu aucune réponse de la part des autres DAEMONs, il décide alors qu'il est le maître MS0.

Quand l'un des trois agents A1 à A3 se rend compte que le maître MS0 ne communique plus avec lui, il entame la procédure ci-dessus dans toutes ses phases qui aboutit à l'election d'un nouveau maître choisi parmi les trois.

De plus le maître notifie périodiquement son existence à toutes les machines du système SID. Si le maître détecte l'existence d'un autre maître, la procédure est reprise, par celui dont l'ID est le plus faible.

La figure 2 qui montre l'automate AUT de répartition des rôles maître-agents entre les différents DAEMONs tournant sur les machines de SID, permettra de mieux comprendre la succession des différentes phases 1 à 5 décrites ci-dessus.

Cet automate AUT comprend 5 états :

- **état I0 :** Le DAEMON en question émet les deux dites informations (son propre ID, son état), ce qui correspond à la phase 1.
- **état I1 :** Le dit DAEMON écoute les réponses des autres DAEMONs, ce qui correspond aux phases 2 et 3.
- **état I2 :** Le dit DAEMON est en attente de l'expiration du délai Tr, et d'une réponse éventuelle du maître MS0.
- **état A :** Le DAEMON en question devient un agent A1, A2, ou A3.
- **état M :** Le DAEMON en question devient le maître MS0.

Les événements qui correspondent à cet automate qui sont dénommés e1 à e8 sont les suivants :

- **e1 :** le DAEMON en question a diffusé son ID et son état et a fixé un délai Tr.
- **e2** : Réception d'un ID, et l'identificateur ID local (celui du DAEMON en question) est inférieur à l'identificateur qu'il reçoit
- **e3** : Réception d'un ID et l'ID local est supérieur ou égal à l'ID reçu.
- **e4** : Le délai Tr a expiré.
- **e5** : Le délai Tr a expiré et le nombre d'essais est inférieur à 5, ou bien un agent vient de répondre.
- **e6** : le maître vient de répondre.
- **e7** : le délai Tr a expiré et le nombre d'essais est égal à 5 et aucun agent n'a répondu.
- **e8 :** la connexion avec le maître est perdue.
- **e9** : Détection par un maître de l'existence d'un autre maître d'ID supérieur.

**ANNEXE 1**

Tableau 1:

| Exemple données de charge mémorisées dans toute mémoire partagée associée à un agent (exprimé en %) | | | | | | | |
|---|---|---|---|---|---|---|---|
| | t1 | t2 | t3 | t4 | t5 | t6 | t7 |
| Charge CPU (W1) | 35 | 12 | 42 | 73 | 92 | 65 | 33 |
| Charge mémoire (W2) | 45 | 32 | 33 | 67 | 46 | 32 | 40 |
| Charge réseau (W3) | 12 | 6 | 33 | 20 | 12 | 38 | 5 |
| Charge entrée/sortie (W4) | 25 | 30 | 56 | 46 | 78 | 44 | 32 |

Tableau 2:

| synthèse des séries de données de charge globale pour chaque machine | | | | | | | |
|---|---|---|---|---|---|---|---|
| | t1 | t2 | t3 | t4 | t5 | t6 | t7 |
| MC0 | 56 | 32 | 67 | 63 | 79 | 82 | 54 |
| MC1 | 23 | 34 | 45 | 56 | 67 | 62 | 79 |
| MC2 | 32 | 38 | 34 | 42 | 35 | 32 | 36 |
| MC3 | 96 | 94 | 79 | 82 | 74 | 79 | 68 |

Tableau 3:

| extrapolation de la valeur de la charge globale après un délai de T pour chaque machine | | | | | | | | |
|---|---|---|---|---|---|---|---|---|
| | t1 | t2 | t3 | t4 | t5 | t6 | t7 | t8 = t7 + T |
| MCO | 56 | 32 | 67 | 63 | 79 | 82 | 54 | estimée 73 |
| MC1 | 23 | 34 | 45 | 56 | 67 | 62 | 79 | estimée 82 |
| MC2 | 32 | 38 | 34 | 42 | 35 | 32 | 36 | estimée 36 |
| MC3 | 96 | 94 | 79 | 82 | 74 | 79 | 68 | estimée 73 |

Tableau 4:

| application du coefficient de puissance, comparaison et sélection | | | | |
|---|---|---|---|---|
| | MC0 | MC1 | MC2 | MC3 |
| Taux de charge estimé | 73 | 82 | 36 | 76 |

Tableau 4:   (suite)

| application du coefficient de puissance, comparaison et sélection | | | | |
|---|---|---|---|---|
| | MC0 | MC1 | MC2 | MC3 |
| Coefficient de puissance | 2.5 | 2 | 0.8 | 1.5 |
| Coefficient de la charge disponible (100 - charge estimée) * coefficient de puissance | 67.5 | 36 | 51.2 | 36 |

**Revendications**

1. Outil (ORC) au service d'une application (APU) répartie tournant sur les machines (MC0 à MC3) d'un système informatique (SID) distribué en réseau local (RE), destiné à répartir la charge sur chacune de celles-ci, le système comprenant une pluralité de modules informatiques (MS0, A1 à A3) appelés DAEMONs, tournant sur ces dernières, dont l'un est appelé maître (MS0) et les autres agents (A1 à A3),

   - le maître (MS0) et les agents (A1 à A3) possédant chacun des moyens (MCC0 à MCC3) de calcul de la charge des machines sur lesquels ils tournent, à des premiers instants d'échantillonnage déterminés ti, et des troyens de mémorisation (MP0 à MP3) des données de charge du maître et des agents,
   - le maître (MS0) contenant :

       - des moyens (MRC0 à MRC3) de collecte des données de charge de chacun des agents, à des seconds instants d'échantillonnages déterminés Ti,
       - des moyens (MTC0) d'envoi des données de charge des autres agents à chacun de ceux-ci,

   - chaque agent (A1 à A3) contenant :

       - des moyens (MRCC1 à MRCC3) de réception des données de charge des autres agents,

   - l'agent local le plus proche de l'application indiquant à celle-ci, sur requête de cette dernière, la machine la moins chargée, l'application prenant alors la décision de demander à cette machine d'éxécuter les services dont elle a besoin,

   caractérisé en ce qu'il comprend des moyens d'élection (AUT) d'un maître parmi les DAEMONs, assurant l'existence et l'unicité de ce maître, au démarrage de ces derniers et suite à la perte d'un maître en cours d'exécution de l'outil (ORC).

2. Outil selon la revendication 1, caractérisé en ce qu'il comprend des moyens (AUT, e8) permettant d'assurer la continuité de service rendu par l'outil à l'application, suite à une panne affectant au moins une machine du système informatique.

3. Outil selon la revendication 1, caractérisé en ce qu'il comprend des moyens (AUT, e1, état 10) de découverte automatique du réseau des machines lui permettant de récupérer les adresses de chacune des machines, au démarrage des DAEMONs.

4. Procédé de mise en oeuvre de l'outil selon la revendication 1, caractérisé en ce qu'il comprend les opérations 1 à 7 suivantes :

   1) les moyens d'élection (AUT) élisent un maître parmi les DAEMONs, assurant l'existence et l'unicité de ce maître lors au démarrage de ces derniers et suite à la perte d'un maître en cours d'exécution de l'outil (ORC);
   2) les agents et le maître (MS0, A1 à A3) recueillent, pour la machine sur laquelle ils tournent, les données de charge de celles-ci, aux premiers intervalles de temps ti, et les moyens de calcul de charge (MCC0 à MCC3) calculent la charge totale de celle-ci à partir des dites données et de sa puissance;
   3) les agents (A1 à A3) envoient au maître (MS0), aux seconds intervalles de temps Ti, les données de charge de la machine correspondante;
   4) le maître (MS0), à ces mêmes seconds instants Ti, centralise les données de charge de tous les agents et les siennes propres, par l'intermédiaire des dits moyens de collecte (MRC0 à MRC3);

5) le maître (MS0) envoie, par l'intermédiaire des moyens d'envois (MTC0), toutes ces données à chaque agent (A1 à A3);

6) chaque agent (A1 à A3) copie toutes ces données de charge dans sa mémoire partagée associée (MP1 à MP3);

7) l'application (APU) recherche, pour l'instant où elle estime avoir besoin qu'on lui rende un service déterminé, et dans la mémoire partagée (MP0 à MP3) de la machine où elle tourne, la charge estimée de chacune des machines (MC0 à MC3), en déduit celle la moins chargée à ce même instant et lui demande alors de lui rendre le dit service.

**Patentansprüche**

1. Werkzeug (ORC) im Dienst einer verteilten Anwendung (APU), die auf den Maschinen (MC0 bis MC3) eines in einem lokalen Netz (RE) verteilten Datenverarbeitungssystems (SID) läuft, das dazu bestimmt ist, die Belastung auf jede von ihnen zu verteilen, wobei das System mehrere Datenverarbeitungsmodule (MS0, A1 bis A3) enthält, die DAEMONs genannt werden und auf diesen letzteren laufen, wobei eines von ihnen Master (MS0) und die anderen Slaves (A1 bis A3) genannt werden,

   - wobei der Master (MS0) und die Slaves (A1 bis A3) jeweils Mittel (MCC0 bis MCC3) für die Berechnung der Belastung der Maschinen, auf denen sie laufen, zu ersten bestimmten Abtastzeitpunkten ti sowie Mittel (MP0 bis MP3) zum Speichern von Daten der Belastung des Masters und der Slaves besitzen,
   - wobei der Master (MS0) enthält:

     - Mittel (MRC0 bis MRC3) zum Sammeln der Belastungsdaten jedes der Slaves zu zweiten bestimmten Abtastzeitpunkten Ti,
     - Mittel (MTC0) zum Schicken der Belastungsdaten der anderen Slaves an jeden von ihnen,

   - wobei jeder Slave (A1 bis A3) enthält:

     - Mittel (MRCC1 bis MRCC3) zum Empfangen der Belastungsdaten der anderen Slaves,
     - wobei der lokale Slave, der sich am nächsten bei der Anwendung befindet, dieser auf Anforderung von dieser letzteren die am wenigsten belastete Maschine nennt, wobei die Anwendung dann die Entscheidung trifft, diese Maschine aufzufordern, die Dienste, die sie benötigt, auszuführen, dadurch gekennzeichnet, daß es Mittel (AUT) zum Wählen eines Masters aus den DAEMONs umfaßt, der die Existenz und die Eindeutigkeit dieses Masters beim Starten dieser letzteren und nach dem Verlust eines Masters im Verlauf der Ausführung des Werkzeugs (ORC) gewährleistet.

2. Werkzeug nach Anspruch 1, dadurch gekennzeichnet, daß es Mittel (AUT, e8) umfaßt, die die Kontinuität des der Anwendung vom Werkzeug zur Verfügung gestellten Dienstes nach einem Fehler, der wenigstens eine Maschine des Datenverarbeitungssystems beeinflußt, gewährleisten.

3. Werkzeug nach Anspruch 1, dadurch gekennzeichnet, daß es Mittel (AUT, e1, Zustand L0) für die automatische Durchsuchung des Netzes der Maschinen umfaßt, die ihm ermöglichen, die Adressen jeder der Maschinen beim Starten der DAEMONs wiederzugewinnen.

4. Verfahren zum Betreiben des Werkzeugs nach Anspruch 1, dadurch gekennzeichnet, daß es die folgenden Operationen 1 bis 7 umfaßt:

   1) die Wählmittel (AUT) wählen einen Master aus den DAEMONs, der die Existenz und die Eindeutigkeit dieses Masters beim Starten dieser letzteren und nach dem Verlust eines Masters im Verlauf der Ausführung des Werkzeugs (ORC) gewährleistet;

   2) die Slaves und der Master (MS0, A1 bis A3) sammeln für die Maschine, auf der sie laufen, die Belastungsdaten dieser letzteren in ersten Zeitintervallen ti und die Belastungsberechnungsmittel (MCC0 bis MCC3) berechnen die Gesamtbelastung dieser letzteren anhand der genannten Daten und ihrer Leistung;

   3) die Slaves (A1 bis A3) schicken dem Master (MS0) in zweiten Zeitintervallen Ti die Belastungsdaten der entsprechenden Maschine;

   4) der Master (MS0) faßt zu diesen zweiten Zeitpunkten Ti die Belastungsdaten sämtlicher Slaves und seine eigenen über die Sammelmittel (MRC0 bis MRC3) zusammen;

5) der Master (MS0) schickt über Sendemittel (MTC0) sämtliche dieser Daten an jeden Slave (A1 bis A3);

6) jeder Slave (A1 bis A3) kopiert alle diese Belastungsdaten in seinen zugeordneten gemeinsam genutzten Speicher (MP1 bis MP3);

7) die Anwendung (APU) sucht für den Zeitpunkt, für den sie schätzt, daß sie Bedarf an der Verfügbarkeit eines bestimmten Dienstes hat, in dem gemeinsam genutzten Speicher (MP0 bis MP3) der Maschine, auf der sie läuft, die geschätzte Belastung jeder der Maschinen (MC0 bis MC3), um daraus die zu diesem Zeitpunkt am wenigsten belastete Maschine abzuleiten und diese dann aufzufordern, ihr den Dienst zur Verfügung zu stellen.

**Claims**

1. Tool (ORC) at the service of a distributed application (APU) running on the machines (MC0 to MC3) of a distributed computer system (SID) in a local network (RE), intended for spreading the load over each of said machines, the system comprising a plurality of information-processing modules (MS0, A1 to A3) called DAEMONs, running on said machines, one of which is called a master (MS0) and the others agents (A1 to A3).

   - the master (MS0) and the agents (A1 to A3) each possessing means (MCC0 to MCC3) for calculating the load of the machines on which they are running, at given first sampling moments ti, and means (MP0 to MP3) for storing the load data from the master and the agents,

   - the master (MS0) containing:

      - means (MRC0 to MRC3) for collecting load data from each of the agents, at given second sampling moments Ti,

   - means (MTCO) for sending load data for the other agents to each of them,

   - each agent (A1 to A3) containing:

      - means (MRCC1 to MRCC3) for receiving load data from the other agents,

      - the local agent closest to the application indicating to said application, at the request of the latter, the least loaded machine, the application then making the decision to request that machine to execute the services that it requires,

   characterised in that it comprises means (AUT) for selecting a master from the DAEMONs, ensuring the existence and the uniqueness of said master, when said DAEMONs start up and following the loss of a master during the execution of the tool (ORC).

2. Tool according to Claim 1, characterised in that it comprises means (AUT, e8) by which the continuity of the service rendered by the tool to the application can be ensured following a failure affecting at least one machine in the computer system.

3. Tool according to Claim 1, characterised in that it comprises means (AUT, el, state 10) for automatically detecting the network of machines that will allow it to retrieve the addresses of each of the machines, when the DAEMONs start up.

4. Process for implementing the tool according to Claim 1, characterised in that it comprises operations 1 to 7 as follows:

   1) the selection means (AUT) choose a master from the DAEMONs, ensuring the existence and the uniqueness of said master when said DAEMONs start up and following the loss of a master during the execution of the tool (ORC);

   2) the agents and the master (MS0, A1 to A3) collect, for the machine on which they are running, the load data thereof, at first intervals of time ti, and the load calculation means (MCC0 to MCC3) calculate the total load thereof on the basis of said data and of its power;

3) the agents (A1 to A3) send to the master (MS0), at second intervals of time Ti, the load data for the corresponding machine;

4) at the same second moments Ti, the master (MS0) centralises the load data for all the agents and its own data, by means of said collection means (MRC0 to MRC3);

5) the master (MS0) sends all these data via the sending means (MTC0) to each agent (A1 to A3);

6) each agent (A1 to A3) copies all said load data into its associated shared memory (MP1 to MP3);

7) the application (APU) searches, for the moment when it estimates that it needs a given service to be rendered to it, and in the shared memory (MP0 to MP3) of the machine on which it is running, for the estimated load of each of the machines (MC0 to MC3), deduces therefrom the least loaded at that moment and then requests it to render said service to it.

FIG.1

FIG.2